# EUROPÄISCHE PATENTANMELDUNG

(11) **EP 4 056 958 A1**
(43) Veröffentlichungstag der Anmeldung: **14.09.2022**
(21) Anmeldenummer: 21161929.1
(22) Anmeldetag: 11.03.2021
(51) Int. Cl.: G01D 5/14, G01P 3/487, G01P 3/488, G01D 5/245

(54) **BREMSE-DREHGEBER-EINHEIT**

(71) Anmelder: Siemens Aktiengesellschaft, 80333 München (DE)
(72) Erfinder: Potoradi, Detlef, 97616 Bad Neustadt/Saale (Mühlbach) (DE); Schmidt, Johannes, 97218 Gerbrunn (DE); Vollmer, Rolf, 36129 Gersfeld (DE)

(57) **Zusammenfassung**

Die Erfindung betrifft eine Bremse-Drehgeber-Einheit (1), aufweisend wenigstens eine Bremsscheibe (30), wobei die Bremsscheibe (30) derart ausgebildet ist, dass sie tangential und/oder axial spielfrei mit einer Welle (20) einer dynamoelektrischen rotatorischen Maschine (22) verbindbar ist, wobei die Bremsscheibe (30) eine Maßverkörperung (31, 32) aufweist, wobei mittels der Maßverkörperung (31, 32) eine Winkeländerung erfassbar ist. Die Erfindung betrifft zudem eine dynamoelektrische rotatorische Maschine (22).

## Beschreibung

Die Erfindung betrifft eine Bremse-Drehgeber-Einheit.

In konventionellen Servoantrieben werden Bremse und Drehgeber üblicherweise als separate Komponenten, insbesondere axial hintereinander angeordnet, im Motor verbaut. Dadurch wird viel Bauraum benötigt.

Zudem weisen insbesondere Federdruckbremsen nach dem aktuellen Stand der Technik ein tangentiales Spiel zwischen Bremsfläche bzw. Bremsscheibe und Welle auf, was unter anderem in Robotik-Anwendungen unerwünscht ist. Gewünscht ist eine spielfreie Verbindung zwischen Welle und Bremsscheibe sowie zwischen Welle und Geberscheibe.

Der Erfindung liegt die Aufgabe zugrunde, einen Servoantrieb dahingehend zu verbessern.

Die Lösung der Aufgabe gelingt durch Anspruch 1, d. h. eine Bremse-Drehgeber-Einheit, aufweisend wenigstens eine Bremsscheibe, wobei die Bremsscheibe derart ausgebildet ist, dass sie tangential und/oder axial spielfrei mit einer Welle einer dynamoelektrischen rotatorischen Maschine verbindbar ist, wobei die Bremsscheibe eine Maßverkörperung aufweist, wobei mittels der Maßverkörperung eine Winkeländerung und/oder ein Winkel und/oder eine Drehrichtung erfassbar ist.

Bremse und Drehgeber werden als zu einem Bauteil zusammengefasst bzw. der Drehgeber wird in die Bremse integriert. Hierzu wird die Bremsscheibe tangential und/oder axial spielfrei mit der Welle verbunden.

In einer bevorzugten Ausführung ist tangentiale Spielfreiheit zwingend, wobei axiale Spielfreiheit optional ist.

Die Bremsscheibe weist vorteilhaft mindestens eine Bremsfläche auf und ist zur Befestigung an einer Welle ausgebildet.

Eine Bremsscheibe kann auch mehrere Bremsflächen aufweisen.

Die Bremsscheibe ist vorteilhaft als ein geometrischer Körper in Form eines Zylinders ausgebildet, wobei ein Radius des Körpers um ein Vielfaches höher ist als eine Dicke des Körpers.

Die Bremsscheibe kann als flacher Körper ausgebildet sein, jedoch sind auch andere Formen möglich.

Die Bremse-Drehgeber-Einheit weist vorteilhaft eine Sensorfläche auf. Auf der Sensorfläche kann die Maßverkörperung ausgebildet sein.

Mittels wenigstens eines Sensors, z. B. einem induktiven oder wirbelstrombasierenden Abstandssensor, kann die Winkeländerung erfasst werden.

Die Maßverkörperung der Bremse-Drehgeber-Einheit weist vorteilhaft eine Winkelauflösung von wenigstens 8 Bit auf.

Dies ermöglicht z. B. eine ausreichend genaue Erfassung einer Winkeländerung.

In einer vorteilhaften Ausführung umfasst die Maßverkörperung eine periodische Abfolge wenigstens eines impulsgebenden Elements und wenigstens eines weiteren Elements.

Das weitere Element ist vorzugsweise ein Element, das keinen Impuls gibt.

Das impulsgebende Element kann zur Erzeugung eines High-Signals ausgebildet sein, das weitere Element kann zur Erzeugung eines Low-Signals ausgebildet sein.

In einer vorteilhaften Ausführung ist die Maßverkörperung als Strichscheibe ausgebildet.

Die Strichscheibe weist z. B. radial angeordnete Teilstriche auf. Die Strichscheibe kann zudem auch axial angeordnete Teilstriche aufweisen.

In einer vorteilhaften Ausführung ist die Maßverkörperung als Gestaltabweichung ausgebildet.

In einer vorteilhaften Ausführung ist das impulsgebende Element als eine Aufdickung ausgebildet.

Die Maßverkörperung ist hierzu z.B. als Kontur ausgebildet, wobei die Kontur Aufdickungen und/oder Vertiefungen aufweist.

Die Aufdickungen und/oder Vertiefungen sind vorteilhaft in einer periodischen Abfolge angeordnet, um eine Impulsgabe zu gewährleisten.

Auf diese Weise kann eine Winkeländerung durch einen Sensor erfasst werden.

Es sind auch kapazitive Impulsgeber denkbar. Eine magnetische Erfassung gelingt beispielsweise mittels einem Hall-Sensor.

In einer vorteilhaften Ausführung ist die Maßverkörperung an einem Außenumfang der Bremsscheibe angeordnet.

Vorteile dieser Ausführung sind unter anderem eine Unabhängigkeit von axialen Toleranzen sowie eine bessere Beherrschbarkeit radialer Toleranzketten.

Eine Signalerfassung bei einem großen Durchmesser, also am Außenumfang, liefert eine bessere Signalauflösung.

Daher ist eine radiale Signalerfassung von Vorteil, aber auch eine axiale Signalerfassung ist möglich.

In einer vorteilhaften Ausführung ist die Maßverkörperung an einer Stirnseite der Bremsscheibe angeordnet.

Ein Vorteil dieser Ausführung ist z. B. eine radial kompakte Bauform.

In einer vorteilhaften Ausführung ist das impulsgebende Element der am Außenumfang der Bremsscheibe angeordneten Maßverkörperung wenigstens im Wesentlichen parallel zu einer der Längsachse der Bremsscheibe verlaufend ausgebildet.

Die Längsachse ist vorteilhaft eine Rotationsachse. Die Bremsscheibe rotiert vorzugsweise zusammen mit der Welle.

In einer vorteilhaften Ausführung ist das impulsgebende Element der an der Stirnseite der Bremsscheibe angeordnete Maßverkörperung radial verlaufend ausgebildet.

In einer vorteilhaften Ausführung ist die Bremsscheibe stoffschlüssig oder kraftschlüssig und/oder verdrehsicher mit der Welle verbindbar.

Dies hat den Vorteil, dass dadurch eine Anwendung in der Robotik ermöglicht bzw. verbessert wird.

Durch eine Bauraumeinsparung, die die Erfindung ermöglicht, kann ein kompakter und leichter Motor geschaffen werden, der insbesondere vorteilhaft bei einer Integration in Roboterarme - bspw. wegen einer geringeren Masse und Trägheit - ist.

Bremse und Drehgeber der Bremse-Drehgeber-Einheit können jedoch auch einteilig ausgebildet sein.

In einer vorteilhaften Ausführung weist die Bremsscheibe ein Material mit einem thermischen Ausdehnungskoeffizienten α von 0 bis 13 ·10⁻⁶ 1/K auf.

Materialbeispiele sind Stahl und technische Keramiken.

Geringe thermische Ausdehnungskoeffizienten sind vorteilhaft, denn sie weisen eine annähernd gleiche Gebergenauigkeit gegenüber Temperaturschwankungen auf.

In einer vorteilhaften Ausführung weist die Bremsscheibe Stahl und/oder Keramik auf.

Aufgrund einer hohen Torsionsbelastung beim Bremsen ist ein derartiges Material bzw. Materialmischung von Vorteil.

Auf Grund der Torsionsbelastung beim Bremsen besteht die Bremsscheibe vorzugsweise aus einem Material mit einem E-Modul > 180 GPa (z. B. Edelstahl). Auch ein Material mit einem E-Modul > 200 GPa ist möglich (z.B. andersartiger Stahl oder Keramik).

Die Lösung der oben gestellten Aufgabe gelingt zudem durch Anspruch 13, d. h. eine dynamoelektrische rotatorische Maschine, aufweisend: eine Welle; eine derartige Bremse-Drehgeber-Einheit; einen Sensor zur Erfassung einer Winkeländerung und/oder eines Winkels und/oder einer Drehrichtung.

Der Sensor erkennt vorteilhaft Drehrichtung und/oder Winkel und/oder Winkeländerung (also Geschwindigkeit/Drehzahl). Der Sensor ist vorteilhaft als Inkrementalgeber ausgebildet.

Es ist auch möglich, dass der Sensor als Absolutwertgeber ausgebildet ist, z.B. mittels einer magnetischen Spur mit Gray-Code-Codierung und/oder einer magnetischen Kamera (z. B. in Form eines Arrays mit GMR-Sensoren).

Die Erfindung bietet den Vorteil, dass eine Maschine kompakt gebaut werden kann. Eine Bauraumeinsparung in axialer Richtung ermöglicht den Bau von besonders kurzen Maschinen, die aufgrund einer höheren Steifigkeit nur eine geringe Schwingungs- und Geräuschneigung aufweisen.

Die Erfindung ist zudem von Vorteil, da ein Sensorsignal nur eine geringe Temperaturempfindlichkeit aufweist.

Im Folgenden wird die Erfindung anhand der in den Figuren gezeigten Ausführungsbeispiele näher beschrieben und erläutert. Es zeigen:
- FIG 1: eine Ausführungsform der Bremse-Drehgeber-Einheit,
- FIG 2: eine weitere Ausführungsform der Bremse-Drehgeber-Einheit,
- FIG 3 und FIG 4: eine dynamoelektrische rotatorische Maschine,
- FIG 5: einen Roboter 51.

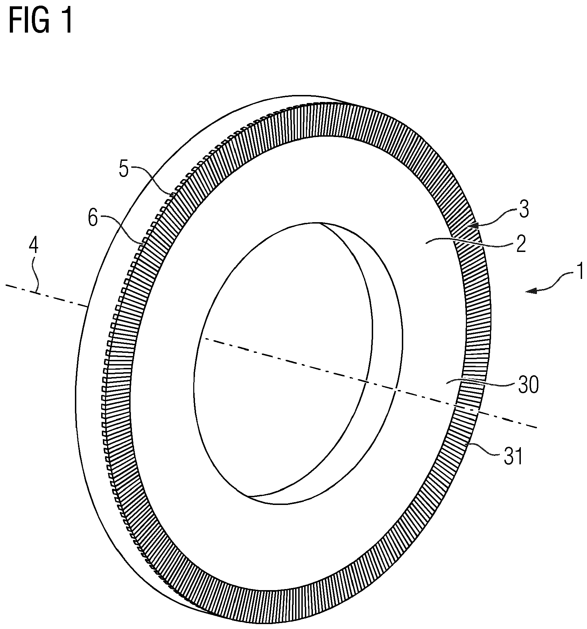

FIG 1 zeigt eine Ausführungsform der Bremse-Drehgeber-Einheit 1.

Die Bremse-Drehgeber-Einheit 1 ist vorteilhaft als Bremsscheibe 30 mit Eigenschaften eines Drehgebers ausgebildet.

Die Bremse-Drehgeber-Einheit 1 umfasst eine Bremsfläche 2 sowie eine Drehgeberfläche 3. Die Drehgeberfläche 3 weist eine stirnseitige Maßverkörperung 31 mit radial angeordneten impulsgebenden Elementen 5 auf. Zwischen zwei impulsgebenden Elementen 5 ist ein weiteres Element 6, welches vorteilhaft ein kein-impulsgebendes Element bzw. nicht-impulsgebendes Element ist, ausgebildet.

Das impulsgebende Element 5 und das weitere Element 6 können sich hinsichtlich verschiedener Aspekte unterscheiden. Sie können beispielsweise eine unterschiedliche Gestalt aufweisen (z. B. als Aufdickung bzw. Vertiefung). Ferner ist eine Unterscheidung aufgrund einer unterschiedlichen Farbgebung oder einer unterschiedlichen elektrischen und/oder magnetischen Leitfähigkeit möglich. Auch andere Unterscheidungsarten sind denkbar.

Die Erfindung ist besonders von Vorteil, da dadurch eine Winkelveränderung und/oder Drehrichtung mit einer platzsparenden Vorrichtung erfasst werden können. Zugleich kann die Maschine sicher abgebremst werden.

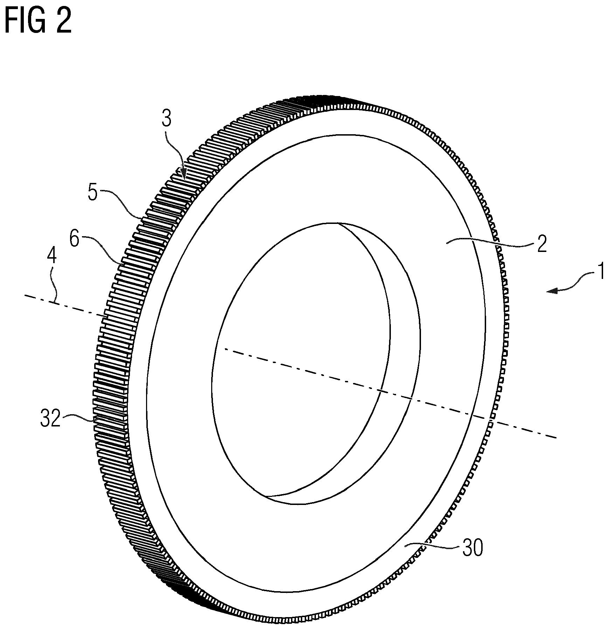

FIG 2 zeigt eine weitere Ausführungsform der Bremse-Drehgeber-Einheit 1.

Die Drehgeberfläche 3 weist eine an einem Außenumfang der Bremse-Drehgeber-Einheit 1 ausgebildete Maßverkörperung 32 auf.

Die impulsgebenden Elemente 5 sind wenigstens im Wesentlichen parallel zu einer Rotationsachse 4 (auch Längsachse) angeordnet.

Vorteilhaft wird die Bremse-Drehgeber-Einheit (ähnlich wie ein Inkrementalgeber) referenziert, da Änderungen der Position in ausgeschaltetem Zustand nicht erfasst werden.

Ein derartiges Referenzsignal, z.B. durch einen zusätzlichen Nullimpuls, ist von Vorteil.

Es sind jedoch auch Maßverkörperungen für Absolutwertgeber denkbar.

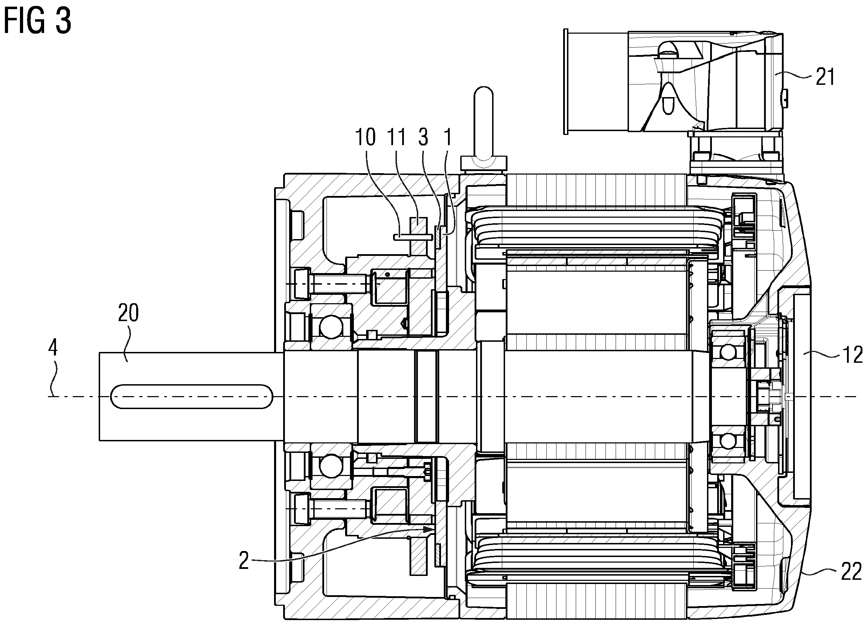

FIG 3 zeigt eine dynamoelektrische rotatorische Maschine 22.

Die Maschine 22 ist vorteilhaft ein Servomotor. Servomotoren eignen sich aufgrund ihrer kompakten Bauweise für Robotik-Anwendungen besonders gut. Zudem ermöglichen sie flüssige und präzise Bewegungsabläufe.

Die Figur zeigt eine Welle 20, die Rotationsachse 4 sowie einen Anschlusskasten 21. Es ist ferner ein Sensor 10 dargestellt, der vorteilhaft einen Abtastkopf aufweist.

Die Figur zeigt zudem eine Vorrichtung 11, die ein Anbringen des Sensors 10 ermöglicht. Dies ist z.B. eine Erweiterung eines Gehäuses der Maschine 22.

Die in der Figur dargestellte Maschine 22 weist die in FIG 1 beschriebene Ausführungsform der Bremse-Drehgeber-Einheit 1 auf. Die Drehgeberfläche 3 weist eine stirnseitige Maßverkörperung 31 mit impulsgebenden Elementen 5 (siehe FIG 1) auf.

Eine Messung beruht vorteilhaft auf einer Richtungsbestimmung und/oder einer Zählung von Impulsen, welche durch das impulsgebende Element 5 ausgelöst werden.

Der Sensor 10 ist so angeordnet, dass Impulse erfasst werden können.

Ein Vorteil der Erfindung ist, dass die Maschine 22 axial betrachtet kürzer gestaltet werden kann.

Da die Bremse-Drehgeber-Einheit 1 an der in der Figur dargestellten Stelle angeordnet ist, kann die gegenüberliegende Seite kürzer gestaltet werden.

A-Seite bedeutet Drive-End, also Seite des Wellenabtriebs. B-Seite bedeutet Non-Drive-End.

Eine abtriebsseitige Anordnung der Bremse-Drehgeber-Einheit 1 ist bevorzugt.

Die Maschine umfasst einen kurzen Gehäusedeckel 12 anstatt des bisher an dieser Stelle angeordneten ausladenden Gebers.

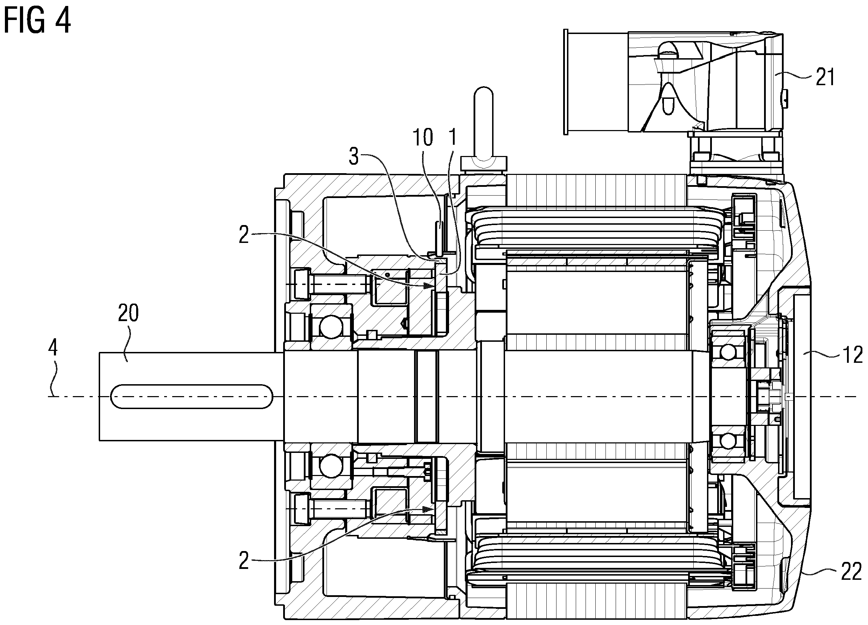

FIG 4 zeigt die dynamoelektrische rotatorische Maschine 22.

Die in der Figur dargestellte Maschine 22 weist die in FIG 2 beschriebene Ausführungsform der Bremse-Drehgeber-Einheit 1 auf.

Die Drehgeberfläche 3 weist eine am Außenumfang der Bremse-Drehgeber-Einheit 1 ausgebildete Maßverkörperung 32 (Maßverkörperung mit impulsgebenden Elementen 5, siehe FIG 1) auf. Der Sensor 10 ist so angeordnet, dass Impulse erfasst werden können.

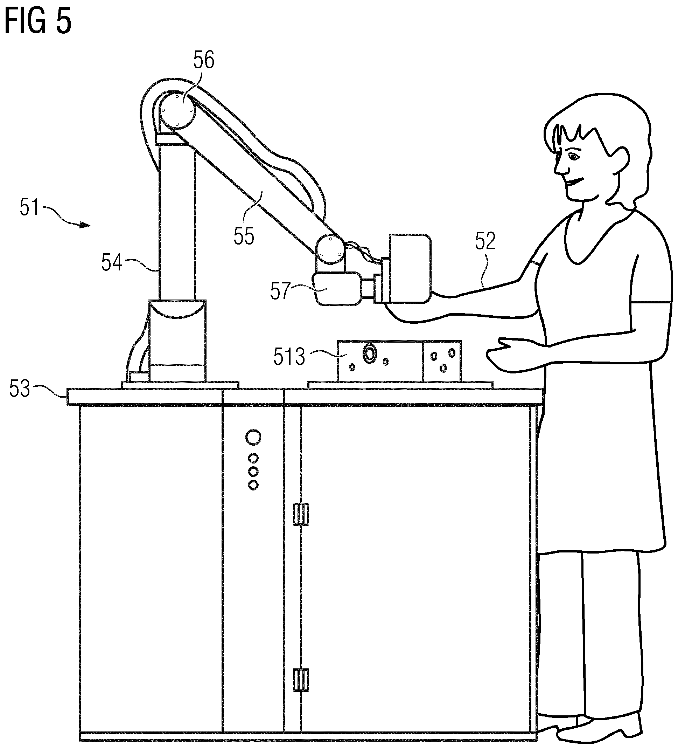

FIG 5 zeigt einen Roboter 51, insbesondere einen kollaborativen Roboter. Die Erfindung eignet sich besonders gut für Antriebssysteme zur Bewegung einer Roboterachse.

Der Roboter 51 ist besonders gut für eine Zusammenarbeit mit einer Person 52 geeignet. Der Roboter 51 umfasst einen Oberarm 54 sowie einen Unterarm 55. Der Oberarm 54 und der Unterarm 55 sind mittels eines Gelenks 56 miteinander verbunden.

Vorteilhaft ist die Maschine 22 im Gelenk 56 angeordnet.

Der Roboter 51 umfasst ein Werkzeug 57, mit welchem ein Werkstück 513, welches in der Figur auf einem Arbeitstisch 53 liegt, bearbeitet werden kann.

Die dynamoelektrische rotatorische Maschine 22 eignet sich (insbesondere in Kombination mit einem Umrichter) besonders gut zum Antrieb eines Arms. Es wird eine Relativbewegung von Unterarm 55 zu Oberarm 54 ermöglicht. Die vorteilhaft als Servomotor ausgebildete Maschine 22 ermöglicht flüssige und präzise Bewegungsabläufe und somit eine optimale Bearbeitung des Werkstücks 513.

## Patentansprüche

1. Bremse-Drehgeber-Einheit (1), aufweisend wenigstens eine Bremsscheibe (30), wobei die Bremsscheibe (30) derart ausgebildet ist, dass sie tangential und/oder axial spielfrei mit einer Welle (20) einer dynamoelektrischen rotatorischen Maschine (22) verbindbar ist, wobei die Bremsscheibe (30) eine Maßverkörperung (31, 32) aufweist, wobei mittels der Maßverkörperung (31, 32) eine Winkeländerung und/oder ein Winkel und/oder eine Drehrichtung erfassbar ist.

2. Bremse-Drehgeber-Einheit (1) nach Anspruch 1, wobei die Maßverkörperung (31, 32) eine periodische Abfolge wenigstens eines impulsgebenden Elements (5) und wenigstens eines weiteren Elements (6) umfasst.

3. Bremse-Drehgeber-Einheit (1) nach einem der vorhergehenden Ansprüche, wobei die Maßverkörperung (31, 32) als Strichscheibe ausgebildet ist.

4. Bremse-Drehgeber-Einheit (1) nach einem der vorhergehenden Ansprüche, wobei die Maßverkörperung (31, 32) als Gestaltabweichung ausgebildet ist.

5. Bremse-Drehgeber-Einheit (1) nach einem der vorhergehenden Ansprüche, wobei das impulsgebende Element (5) als eine Aufdickung ausgebildet ist.

6. Bremse-Drehgeber-Einheit (1) nach einem der vorhergehenden Ansprüche, wobei die Maßverkörperung (31, 32) an einem Außenumfang der Bremsscheibe (30) angeordnet ist.

7. Bremse-Drehgeber-Einheit (1) nach einem der vorhergehenden Ansprüche, wobei die Maßverkörperung (31, 32) an einer Stirnseite der Bremsscheibe (30) angeordnet ist.

8. Bremse-Drehgeber-Einheit (1) nach einem der Ansprüche 6 oder 7, wobei das impulsgebende Element (5) der am Außenumfang der Bremsscheibe angeordneten Maßverkörperung (32) wenigstens im Wesentlichen parallel zu einer der Längsachse (4) der Bremsscheibe (30) verlaufend ausgebildet ist.

9. Bremse-Drehgeber-Einheit (1) nach einem der Ansprüche 7 oder 8, wobei das impulsgebende Element (5) der an der Stirnseite der Bremsscheibe angeordnete Maßverkörperung (31) radial verlaufend ausgebildet ist.

10. Bremse-Drehgeber-Einheit (1) nach einem der vorhergehenden Ansprüche, wobei die Bremsscheibe (30) stoffschlüssig oder kraftschlüssig und/oder verdrehsicher mit der Welle (20) verbindbar ist.

11. Bremse-Drehgeber-Einheit (1) nach einem der vorhergehenden Ansprüche, wobei die Bremsscheibe (30) ein Material mit einem thermischen Ausdehnungskoeffizienten α von 0 bis 13 ·10⁻⁶ 1/K aufweist.

12. Bremse-Drehgeber-Einheit (1) nach einem der vorhergehenden Ansprüche, wobei die Bremsscheibe (30) Stahl und/oder Keramik aufweist.

13. Dynamoelektrische rotatorische Maschine (22), aufweisend:
- eine Welle (20),
- eine Bremse-Drehgeber-Einheit (1) nach einem der Ansprüche 1 bis 12,
- einen Sensor (10) zur Erfassung einer Winkeländerung und/oder eines Winkels und/oder einer Drehrichtung
